# EUROPÄISCHE PATENTSCHRIFT

(11) **EP 3 424 640 B1**
(45) Veröffentlichungstag und Bekanntmachung des Hinweises auf die Patenterteilung: **07.09.2022**
(21) Anmeldenummer: 17020279.0
(22) Anmeldetag: 03.07.2017
(51) Int. Cl.: B32B 17/06, B32B 27/36, B32B 3/06, B23Q 11/08, B60J 1/20, E06B 5/10

(54) **POLYCARBONATSCHEIBE UND ANORDNUNG DERSELBEN AN EINEM SICHTFENSTER**
POLYCARBONATE PANE AND ASSEMBLY OF THE SAME ON A VIEWING WINDOW
PLAQUE EN POLYCARBONATE ET SON ARRANGEMENT SUR UN REGARD

(43) Veröffentlichungstag der Anmeldung: 09.01.2019
(73) Patentinhaber: Nilsson, Jonas, 58422 Linköping (SE)
(72) Erfinder: Nilsson, Jonas, SE-58422 Linköping (SE)
(74) Vertreter: Kayser, Christoph

(56) Entgegenhaltungen:
- DE-A1-102005 031 610
- DE-U1- 8 605 635
- DE-U1- 29 518 577
- JP-A- 2000 175 956

## Beschreibung

Die vorliegende Erfindung betrifft eine Anordnung aus einem Sichtfenster und einer Hintersatzscheibe, wobei die Hintersatzscheibe an einer Lichtaustrittsseite des Sichtfensters lösbar befestigt ist, und für die Befestigung ein Befestigungselement auf einer Fenster-Randfläche des Sichtfensters aufgebracht ist, wobei das Befestigungselement mit einer Fenster-Klebefläche an der Fenster-Randfläche dauerhaft befestigt ist und eine Fenster-Haftfläche aufweist, an der die Hintersatzscheibe lösbar angebracht ist.

Eine solche Hintersatzscheibe ist z. B. aus DE 10 2005 031 610 A1 bekannt. In dieser Druckschrift ist in einer ersten Ausführungsform ein Splitterschutzelement über ein rahmenartiges Verstärkungsprofil an einer Scheibe eines Glasdeckels zum Verschließen einer Dachöffnung eines Fahrzeugs angebracht. Das Verstärkungsprofil verdeckt einen großen Teil des Sichtbereichs der Scheibe, so dass eine solche Konstruktion für ein Sichtfenster nachteilig ist. In einer zweiten Ausführungsform ist das Splitterschutzelement über einen Karosserieflansch und eine seitliche Umschäumung der Dachöffnung vor der Scheibe angeordnet. Auch diese Konstruktion verdeckt große Teile des Randbereichs der Scheibe und ist somit ebenfalls nicht für ein Sichtfenster geeignet. Zudem ist die Konstruktion sehr kompliziert und verlangt eine genaue Positionierung und Ausrichtung mehrerer Bauteile. In einer dritten Ausführungsform ist das Splitterschutzelement direkt an die Scheibe geklebt. Der zwischen dem Splitterschutzelement und der Scheibe angeordnete Kleber beeinträchtigt die klare Sicht aus einem Sichtfenster. Für die Befestigung des Splitterschutzelements wird eine Haken-/Ösen-Verbindung genutzt.

Aus DE 295 18 577 U1 ist eine Schutzeinrichtung an Arbeitsplätzen bekannt. In dieser Druckschrift ist eine Anordnung beschrieben, bei der eine raumseitige Schutzscheibe an einem einseitige U-Profil fest montiert ist und eine außenliegende Schutzscheibe austauschbar ist, wobei beide Schutzscheiben über einen rahmenartigen Klettverschluss miteinander verbunden sind. In dieser Ausführungsform soll die innenliegende Schutzscheibe dicker ausgebildet sein, um dem rauen Betrieb standzuhalten. Mit einer solchen Anordnung kann die innenliegende Schutzscheibe nicht als austauschbar Hintersatzscheibe verwendet werden. Für die Befestigung der Schutzscheibe wird eine Haken-/Ösen-Verbindung genutzt.

Aus dem Stand der Technik sind allgemein Hintersatzscheiben bekannt, die von innen an Sichtfenstern angeordnet werden. Solche Hintersatzscheiben sind zum Beispiel bei Kraftfahrzeugen bekannt, bei denen diese als Sonnenschutz innen an der Heckscheibe und den hinteren Seitenfenstern befestigt werden.

Für eine geeignete Befestigung der Polycarbonatscheibe als Hintersatzscheibe an einem Sichtfenster sind Klemmkeile bekannt, welche am Umfang des Sichtfensters zwischen Fahrzeugverkleidung und Hintersatzscheibe eingefügt werden, um die Hintersatzscheibe von innen an das Sichtfenster zu drücken und dadurch zu fixieren.

Solche Keile sind Einzelteile, die verlorengehen können und unter Umständen auch an unterschiedliche Fahrzeugtypen oder Sichtfenster angepasst sein müssen.

Die Aufgabe der vorliegenden Erfindung ist daher, eine Anordnung aus einem Sichtfenster und einer innenliegenden Hintersatzscheibe der eingangs genannten Art derart weiterzubilden, dass die Montage der Hintersatzscheibe einfacher und sicherer durchzuführen ist.

Die Aufgabe der vorliegenden Erfindung wird dadurch gelöst, die Befestigungseinrichtung ein beidseitig haftendes, punkt- oder streifenförmiges Befestigungselement ist, das mit einer Fenster-Klebefläche an der Fenster-Randfläche dauerhaft befestigt ist und eine Fenster-Haftfläche aufweist, an der die Hintersatzscheibe lösbar angebracht ist, wobei die Hintersatzscheibe eine Dicke von kleiner/gleich 5 mm aufweist, derart dass die Hintersatzscheibe biegeweich ist und in ihrer Lage am Sichtfenster eingespannt werden kann.

Die Aufgabe wird erfindungsgemäß auch durch eine Hintersatzscheibe nach Anspruch 8gelöst.

Mit der vorliegenden Erfindung ist es möglich, an mehreren Stellen oder durchgehend ein fest an einer Fenster-Randfläche des Sichtfensters haftendes Befestigungselement vorzusehen, zum Beispiel einen Streifen oder mehrere Streifenabschnitte, die fest mit dem Sichtfenster verbunden sind und mit der Hintersatzscheibe eine lösbare Verbindung eingehen. Lose Befestigungselement entfallen.

Entsprechend ist es von Vorteil, wenn eine Polycarbonatscheibe an einer Scheiben-Randfläche wenigstens ein Befestigungselement aufweist, das eine Scheiben-Haftfläche mit einer Haftwirkung aufweist, derart, dass eine Verbindung mit einem Sichtfenster manuell lösbar ist.

Auch eine solche Polycarbonatscheibe kann als Hintersatzscheibe an Sichtfenstern in Kraftfahrzeugen zum Einsatz kommen.

Die vorliegende Erfindung ist nicht auf das Anbringen von Hintersatzscheiben an Kraftfahrzeugen beschränkt. Die erfindungsgemäße Anordnung und die erfindungsgemäße Polycarbonatscheibe können auch an beliebigen anderen Sichtfenstern angebracht werden. Solche Sichtfenster gibt es in Gebäuden, in Cockpits, Eisenbahnwaggons oder aber auch in Baufahrzeugen, wie Kränen oder dergleichen.

Ein weiterer Vorteil ist, dass die Hintersatzscheibe aus Polycarbonat hergestellt ist. Polycarbonate sind Kunststoffe aus der Gruppe der synthetischen Polymere und haben gegenüber Glas den Vorteil, dass sie ein sehr viel geringeres Gewicht haben und somit die Hintersatzscheibe leicht machen. So beträgt die Dichte von Polycarbonaten nur 1,2 g/cm³ gegenüber der Dichte von Glas mit 2,5 g/cm³. Zudem weisen sich Polycarbonate auch durch eine hohe Festigkeit, Schlagzähigkeit, Steifigkeit und Härte aus. Polycarbonate sind weitgehend beständig gegenüber Einflüssen von Witterung und Strahlung und sind auch gute Isolatoren gegen elektrischen Strom, beständig gegenüber Wasser, vielen Mineralsäuren und wässrigen Lösungen von neutralen Salzen und Oxidationsmitteln. Schließlich sind Polycarbonate transparent und farblos und lassen sich gut einfärben.

Für die vorliegende Erfindung ist es von besonderem Vorteil, dass die Hintersatzscheibe aus Polycarbonat eine Dicke von ≤ 5 mm, vorzugsweise von 0,5 mm bis 4 mm und ganz bevorzugt von 1 bis 3 mm aufweist. Aufgrund der geringen Dicke ist es möglich, die Hintersatzscheibe zu biegen und in ihrer Lage am Sichtfenster einzuspannen. Zudem wird durch die geringe Dicke auch das Gewicht der Hintersatzscheibe verringert, was sich günstig auf deren Handhabung auswirkt.

Ein besonderer Vorteil der vorliegenden Erfindung ist, dass die Hintersatzscheibe eingefärbt ist. Durch die Einfärbung der Hintersatzscheibe ist es möglich, das von außen eindringende Licht zu filtern und dessen Intensität nach Austritt aus der Hintersatzscheibe, d.h. z.B. in einem Innenraum, Fahrzeugraum o.dgl., zu verringern.

Weitere Vorteile ergeben sich aus den Merkmalen der Unteransprüche.

Eine Ausführungsform der vorliegenden Erfindung wird im Folgenden anhand der Zeichnung näher beschrieben. Es zeigen:
Fig. 1 eine schematische Ansicht eines Sichtfensters in einer Ausführungsform als Heckfenster eines Fahrzeugs mit einer aufgesetzten Hintersatzscheibe, teilweise weggebrochen;
Fig. 2 eine schematische Ansicht entlang des Schnitts A-A in Fig. 1.

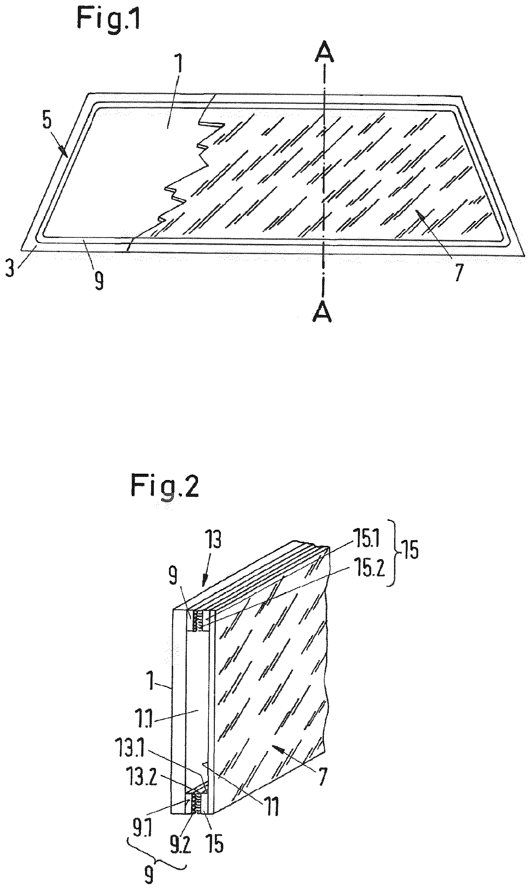

In Fig. 1 ist schematisch ein Sichtfenster 1 in einer Ausführungsform als Heckfenster eines Fahrzeugs dargestellt. Das Sichtfenster 1 kann in anderen Ausführungsformen auch ein Seitenfenster eines Fahrzeugs oder ein beliebiges anderes Sichtfenster sein, durch das Licht einfällt. Solche Sichtfenster gibt es auch in Cockpits von Flugzeugen, auf Kommandobrücken von Schiffen, in Führerständen von Zügen, in Waggons und in Gebäuden. Die vorliegende Erfindung ist nicht beschränkt auf ein konkretes Sichtfenster, auch wenn zur besseren Darstellung der vorliegenden Erfindung und zur Beschreibung derselben das Sichtfenster eines Kraftfahrzeugs herangezogen wird.

Das Sichtfenster 1 weist eine Fenster-Randfläche 3 auf, auf die eine Befestigungseinrichtung 5 für eine Hintersatzscheibe 7 aufgebracht. In der in Fig. 1 dargestellten Ausführungsform ist die Befestigungseinrichtung 5 ein beidseitig haftendes Befestigungselement 9, das auf der Fenster-Randfläche 3 einer Kontur des Sichtfensters 1 folgend, umlaufend aufgebracht ist. In anderen Ausführungsformen kann das beidseitig haftende Befestigungselement 9 auf der Fenster-Randfläche 3 auch nur abschnittsweise aufgebracht sein, also der Kontur nicht kontinuierlich folgend. Solche Abschnitte des beidseitig haftenden Befestigungselements 9 können bis auf Befestigungspunkte reduziert sein.

Mit "beidseitig haftendem Befestigungselement" 9 sind also Befestigungsstreifen und Befestigungspunkte gemeint, die an der Fenster-Randfläche 3 bzw. auf derselben entlang einer Kontur des Sichtfensters 1 aufgebracht sind.

In der dargestellten, bevorzugten Ausführungsform ist das beidseitig haftende Befestigungselement 9 ein durchgehender Streifen mit einer Fenster-Klebefläche 9.1 (Fig. 2) und einer Fenster-Haftfläche 9.2. Die Fenster-Klebefläche 9.1 weist einen Kleber auf, mit dem das Befestigungselement 9 dauerhaft an der Fenster-Randfläche 3 des Sichtfensters 1 aufgebracht ist. In der vorliegenden Ausführungsform weist die Fenster-Haftfläche 9.2 einen mehrfach haftenden Kleber auf, dessen Bindungsstärke so gering ist, dass eine manuelle rückstandsfreie Lösung der Verbindung möglich ist.

Fig. 2 zeigt einen solchen rückstandsfrei, mehrfach haftenden Kleber zusammen mit einer Haken- oder Ösenstruktur.

Die Hintersatzscheibe 7 weist eine an das Sichtfenster 1 angepasste Kontur auf. Auf einer dem Sichtfenster 1 zugewandten Seite ist an einer Scheiben-Randfläche 11 eine Scheiben-Befestigungseinrichtung 13 vorgesehen. Die Scheiben-Befestigungseinrichtung 13 ist in der vorliegenden Ausführungsform ein beidseitig haftendes Scheiben-Befestigungselement 15, das eine Scheiben-Klebefläche 15.1 und eine Scheiben-Haftfläche 15.2 aufweist. Auf der Scheiben-Klebefläche 15.1 ist ein Kleber aufgebracht, mit der das Scheiben-Befestigungselement 15 dauerhaft an der Scheiben-Randfläche 11 aufgebracht ist. Die Ausbildung und Anordnung des Scheiben-Befestigungselements 13 ist so gewählt, dass die Scheiben-Haftfläche 15.2 und die Fenster-Haftfläche 9.2 weitestehend deckungsgleich sind, wenn die Hintersatzscheibe 7 an dem Sichtfenster 1 angebracht ist. Die Hintersatzscheibe 7 ist im Wesentlichen aus Polycarbonat hergestellt und vorzugsweise gefärbt. In einer bevorzugten Ausführungsform ist hat die Hintersatzscheibe 7 ein Basiselement, das mit ein - oder beidseitig beschichtet ist. In diesem Fall führt dann die Beschichtung zu der Färbung und ggf. zu einer Verdunklung der Hintersatzscheibe 7, so dass die freie Sicht durch das Sichtfenster 1 in, zum Beispiel das Innere eines Fahrzeugs, verhindert oder zumindest behindert wird, umgekehrt, von innen nach außen aber nicht.

Die Hintersatzscheibe 7 hat insgesamt (also ggf. einschließlich aller Beschichtungen) eine Dicke von ≤ 5 mm, vorzugsweise von 0,5 mm bis 4 mm und ganz bevorzugt von 1 bis 3 mm.

Die Härte der Hintersatzscheibe 7 wird von der Härte des Basiselements bestimmt und entspricht einer Rockwell Härte M70 (ISO 2039). In der bevorzugten Ausführungsform entsprechen die technischen Daten der Hintersatzscheibe 7 im Wesentlichen den technischen Daten einer beschichteten Polycarbonatscheibe, die von Arla Plast AB, Schweden, unter der Marke Saphir^{®}Colorado^{®} und ColoradoSL^{®} hergestellt und in den Verkehr gebracht wird. Diese Polycarbonatscheiben sind hart beschichtet und haben somit eine besonders kratzfeste Oberfläche.

### Bezugszeichenliste

- 1: Sichtfenster
- 3: Fenster-Randfläche
- 5: Befestigungseinrichtung
- 7: Hintersatzscheibe
- 9: Befestigungselement
- 9.1: Fenster-Klebefläche
- 9.2: Fenster-Haftfläche
- 11: Scheiben-Randfläche
- 13: Scheiben-Befestigungseinrichtung
- 15: Scheiben-Befestigungselement
- 15.1: Scheiben-Klebefläche
- 15.2: Scheiben-Haftfläche

## Patentansprüche

1. Anordnung aus einem Sichtfenster (1) und einer Hintersatzscheibe (7), wobei die Hintersatzscheibe (7) an einer Lichtaustrittsseite des Sichtfensters (1) lösbar befestigt ist, und für die Befestigung ein Befestigungselement (9) auf einer Fenster-Randfläche (3) des Sichtfensters (3) aufgebracht ist, wobei das Befestigungselement (9) mit einer Fenster-Klebefläche (9.1) an der Fenster-Randfläche (3) dauerhaft befestigt ist und eine Fenster-Haftfläche (9.2) aufweist, an der die Hintersatzscheibe (7) lösbar angebracht ist,
**dadurch gekennzeichnet,**
**dass** die Fenster-Haftfläche (9.2) einen mehrfach haftenden Kleber aufweist, derart, dass die Hintersatzscheibe (7) manuell von dem Sichtfenster (1) gelöst werden kann.

2. Anordnung nach Anspruch 1,
**dadurch gekennzeichnet,**
**dass** das Befestigungselement (9) an der Fenster-Randfläche (3) entlang einer Kontur des Sichtfensters (1) angebracht ist.

3. Anordnung nach Anspruch 1 oder 2,
**dadurch gekennzeichnet,**
**dass** die Hintersatzscheibe (7) aus hart beschichtetem Polycarbonat hergestellt ist und eine kratzfeste Oberfläche aufweist.

4. Anordnung nach Anspruch 3,
**dadurch gekennzeichnet,**
**dass** die Hintersatzscheibe (7) eine Dicke von ≤ 5mm,-vorzugsweise von 0,5mm bis 4mm und ganz bevorzugt von 1 bis 3mm aufweist.

5. Anordnung nach einem der Ansprüche 1 bis 4,
**dadurch gekennzeichnet,**
**dass** die Hintersatzscheibe (7) gefärbt ist.

## Claims

1. An arrangement made up of a window (1) and a rear kit pane (7), wherein the rear kit pane (7) is fastened to a light outlet side of the window (1) in a detachable manner, and for fastening purposes, a fastening element (9) is mounted on a lateral window face (3) of the window (3), wherein the fastening element (9) is permanently fastened to the lateral window face (3) using a window adhesive area (9.1) and has a window adhesive area (9.2) to which the rear kit pane (7) is attached in a detachable manner,
**characterized in that**
the window adhesive area (9.2) exhibits a reusable adhesive, in such a manner that the rear kit pane (7) can be manually detached from the window (1).

2. The arrangement according to claim 1,
**characterized in that**
the fastening element (9) is attached to the window lateral face (3) along a contour of the window (1).

3. The arrangement according to claim 1 or 2,
**characterized in that**
the rear kit pane (7) is produced from hard-coated polycarbonate and has a scratch-resistant surface.

4. The arrangement according to claim 3,
**characterized in that**
the rear kit pane (7) has a thickness of ≤ 5mm, preferably of 0.5 mm to 4 mm, and quite preferably of 1 to 3 mm.

5. The arrangement according to one of claims 1 to 4,
**characterized in that**
the rear kit pane (7) is coloured.

## Revendications

1. Ensemble, constitué d'une fenêtre transparente (1) et d'une vitre de doublage (7), la vitre de doublage (7) étant fixée de manière amovible sur un côté de sortie de lumière de la fenêtre transparente (1) et pour la fixation, un élément de fixation (9) étant monté sur une surface marginale (3) de fenêtre de la fenêtre transparente (3), l'élément de fixation (9) étant fixé de manière durable par une surface collante (9.1) de fenêtre sur la surface marginale (3) de fenêtre et comportant une surface adhérente (9.2) de fenêtre sur laquelle la vitre de doublage (7) est montée de manière amovible,
**caractérisé en ce que**
la surface adhérente (9.2) de fenêtre comporte un agent adhésif à adhérence multiple, de sorte qu'il soit possible de désolidariser manuellement la vitre de doublage (7) de la fenêtre transparente (1).

2. Ensemble selon la revendication 1,
**caractérisé en ce que**
l'élément de fixation (9) est monté sur la surface marginale (3) de fenêtre, le long d'un contour de la fenêtre transparente (1).

3. Ensemble selon la revendication 1 ou 2,
**caractérisé en ce que**
la vitre de doublage (7) est fabriquée en polycarbonate à revêtement dur et comporte une surface inrayable.

4. Ensemble selon la revendication 3,
**caractérisé en ce que**
la vitre de doublage (7) présente une épaisseur ≤ 5 mm, de préférence de 0,5 mm à 4 mm et de manière très préférentielle, de 1 à 3 mm.

5. Ensemble selon l'une quelconque des revendications 1. à 4,
**caractérisé en ce que**
la vitre de doublage (7) est teintée.
